# EUROPEAN PATENT SPECIFICATION

(11) **EP 3 716 789 B1**
(45) Date of publication and mention of the grant of the patent: **09.10.2024**
(21) Application number: 18800176.2
(22) Date of filing: 13.11.2018
(51) Int. Cl.: A23L 27/14, A23L 29/00, A23L 19/00, A23L 23/10, A23P 10/43, A23P 10/47

(54) **SAVOURY, PARTICULATE COMPOSITIONS COMPRISING TOMATO POWDER**
SCHMACKHAFTE TEILCHENFÖRMIGE ZUSAMMENSETZUNGEN MIT TOMATENPULVER
COMPOSITIONS PARTICULAIRES SALÉES COMPRENANT DE LA POUDRE DE TOMATE

(30) Priority: 30.11.2017 EP 17204712
(43) Date of publication of application: 07.10.2020
(73) Proprietor: Unilever IP Holdings B.V., 3013 AL Rotterdam (NL)
(72) Inventor: ROSINSKI, Mariusz, 21465 Reinbek (DE); BAGGEN, Marc Hermann Marie, 74074 Heilbronn (DE)
(74) Representative: van den Brom, Coenraad Richard
(86) International application number: PCT/EP2018/081010
(87) International publication number: WO 2019/105729

(56) References cited:
- EP-A1- 2 997 833
- WO-A1-2005/070229
- US-A1- 2007 259 080
- ANONYMOUS: "Aktiv Suppe Tomate", GNPD, MINTEL, 1 February 2004 (2004-02-01), XP002777828
- ZHENG H: "Meal replacement food comprises yam powder, konjak powder, sweet potato powder, soybean meal, tomato powder, calcium carbonate, vitamin, xylitol, edible essence, and chitin", WPI / 2017 CLARIVATE ANALYTICS,, vol. 2015, no. 29, 4 March 2015 (2015-03-04), XP002777829
- "Scientific Opinion on re-evaluation of calcium carbonate (E 170) as a food additive EFSA Panel on Food Additives and Nutrient Sources added to Food (ANS)", EFSA JOURNAL EFSA JOURNAL, 1 January 2011 (2011-01-01), pages 4 - 73, XP055171488, Retrieved from the Internet <URL:http://www.efsa.europa.eu/en/efsajournal/doc/2318.pdf> [retrieved on 20150223], DOI: 10.2903/j.efsa.2011.2318
- LIU F X ET AL: "Changes of tomato powder qualities during storage", POWDER TECHNOL,, vol. 204, 1 January 2010 (2010-01-01), pages 159 - 166, XP002777806

## Description

### TECHNICAL FIELD OF THE INVENTION

The present invention relates to a savoury, particulate composition comprising tomato powder and calcium carbonate. It further relates to a process for preparing a savoury, particulate composition comprising tomato powder and calcium carbonate and to the use of calcium carbonate to enhance sweet, fruity taste notes of tomato powder comprising compositions

### BACKGROUND OF THE INVENTION

Savoury, particulate compositions comprising tomato powder are well known in the food industry. Tomato (*Solanum. lycopersicum*) powder is a dried, fine, particulate material that is used as an ingredient in many savoury food products, such as sauces and soups. Tomato powder is a valuable dietary source of lycopene, which is widely considered to be one of the most effective carotenoid antioxidants, possessing free-radical-scavenging activity superior to that of β-carotene.

Typically, tomato powder is included in savoury, particulate food products along with one or more of salt, sugar, taste enhancer, fat, herbs, spices, flavours, starch, and other components.

WO 2005/070229 A1 relates to a process for preparing dry sliced tomato/dry diced tomato/dry tomato powder comprising a step of treating slices or dices of tomato with calcium chloride or calcium gluconate solution. US2007/0259080 discloses pKa buffered flavour enhanced reduced moisture partially dried frozen fruits and vegetables. CaCO₃, MgOH KOH, is used to alter the pKa and thus reduces the pH and neutralizes the bitter taste of CaCl₂.

It is an object of the present invention to provide a dry, tomato composition having an improved flavour.

Savoury tomato powder comprising food products typically comprise added sugar to provide the consumer with the desired flavour experience. However, consumers increasingly look for food products having a reduced sugar content. There is a need for savoury, tomato powder comprising compositions with a reduced sugar content, compared to traditional savoury, tomato powder comprising compositions.

### SUMMARY OF THE INVENTION

It has been surprisingly found that savoury particulate compositions containing tomato powder and 0.5-5 wt. %, by weight of the tomato powder, calcium carbonate can be advantageously used in the preparation of savoury food products. By combining tomato powder with a relative small quantity of calcium carbonate, the rich and fruity, rounded tomato flavour notes of the tomato powder can be enhanced.

Thus, one aspect of the present invention pertains to a savoury, particulate composition having a water content of not more than 15 wt.% and comprising:
a) 5-99 wt.%, by weight of the composition, tomato powder, wherein at least 70 wt.% of said tomato powder has a mesh size of less than 850 µm,
b) 0.5-5 wt.%, by weight of the tomato powder, calcium carbonate powder, said calcium carbonate powder having a volume median grain diameter (D50) of 0.1-50 µm.

The invention further pertains to a process for preparing a savoury, particulate composition as described above, and to a method for preparing a sauce, soup, condiment or gravy. In a further aspect, the present invention relates to the use of calcium carbonate as an enhancer of sweet, fruity taste notes of compositions comprising tomato powder.

### DETAILED DESCRIPTION OF THE INVENTION

Accordingly, a first aspect of the invention relates to a savoury, particulate composition having a water content of not more than 15 wt.% and comprising:
a) 5-99 wt.%, by weight of the composition, tomato powder, wherein at least 70 wt.% of said tomato powder has a mesh size of less than 850 µm,
b) 0.5-5 wt.%, by weight of the tomato powder, calcium carbonate powder, said calcium carbonate powder having a volume median grain diameter (D50) of 0.1-50 µm

The word 'comprising' as used herein is intended to mean 'including' but not 'consisting of' or 'composed of'. In other words, the listed steps or options need not be exhaustive.

Unless specified otherwise, numerical ranges expressed in the format 'from x to y' or `x-y' are understood to include x and y. When for a specific feature multiple preferred ranges are described in the format 'from x to y' or 'x-y', it is understood that all ranges combining the different endpoints are also contemplated. For the purpose of the invention ambient temperature is defined as a temperature of about 20°C.

Unless indicated otherwise, weight percentages (wt.%) are based on the total weight of the composition.

The term "particulate" as used herein refers to a powder or to a granulate.

The term "tomato powder" as used herein refers to a powder obtained from the fruit of the plant *Solanum lycopersicum.*

The term "calcium carbonate powder" as used herein refers to a particulate material comprising at least 50 wt.% matter with the chemical formula CaCOs. The calcium carbonate is obtained from natural sources or alternatively calcium carbonate can be synthesized.

"Natural calcium carbonate" as used herein refers to calcium carbonate obtained from geological sources such as sedimentary rocks, for example, aragonite, calcite, chalk, limestone, marble, tavernite or vaterite, or obtained from biological sources such as eggshells, oyster shells and snail shells.

"Synthesized calcium carbonate" as used herein refers to calcium carbonate" typically obtained by the soda-lime process, the Solvay process or by precipitation. Precipitation calcium carbonate refers to calcium carbonate obtained by a reaction of carbon dioxide and lime in an aqueous environment or by precipitation of a calcium and carbonate ion source in water or by precipitation of calcium and carbonate ions for example calcium chloride and sodium carbonate out of solution.

"D10" "D50" and "D90" as used herein refer to the particle size distributions of a powder. For example, the "D10" is the diameter at which 10% of the sample's mass is comprised of particles with a diameter less than this value. The "D50" is the diameter of the particle that 50% of a sample's mass is smaller than and 50% of a sample's mass is larger than. "D10" "D50" and "D90" can be measured by sieves or by light scattering.

Volume median grain diameter (D₅₀) can be measured by sieving or by light scattering using a Malvern Mastersizer 2000 Laser Diffraction System. The method and the instrument are known to the skilled person and are commonly used to determine grain sizes of fillers and pigments.

### Tomato powder

In a preferred embodiment, the savoury, particulate composition has a water content of not more than 15 wt.% and comprises:
a) 80-99 wt.%, by weight of the composition, tomato powder, wherein at least 70 wt.% of said tomato powder has a mesh size of less than 850 µm,
b) 0.5-5 wt.%, by weight of the tomato powder, calcium carbonate powder, said calcium carbonate powder having a volume median grain diameter (D₅₀) of 0.1-50 µm.

Preferably, the savoury particulate composition includes tomato powder and calcium carbonate powder and is suitable for including as an ingredient in savoury food products.

It is preferred that the savoury, particulate composition comprises 85-99 wt.%, by weight of the composition, tomato powder, more preferably 88-95 wt.%, even more preferably 90-92.5 by weight of the composition, tomato powder.

Tomato powders are known in the art. Tomato powders may be produced by spray drying or atomization of tomato pastes. Typically, tomatoes are washed, diced and heated at 80°C for 20 seconds to inactivate the enzymes and then pulped. The tomato pulp is concentrated to 25% solids through vacuum concentration at 50°C and used as a feed of a spray dryer. The dryer can be operated in co-current pattern and the inlet and outlet air temperatures and rotary wheel atomizer speed maintained at 160°C, 85°C 28 000 rpm, respectively (Liu, F. X., Cao, X. M, Wang, H. Y. and Liao, X.J. (2010) 'Changes of tomato powder qualities during storage'. Powder Technol., 204 159-166).

Following drying of the concentrated tomato pulp , the dried tomato powder is sieved and the calcium carbonate powder is added and the savoury, particulate composition is transferred to a silo for storage, or transported to a production facility, or sold directly, for use as a food ingredient. Optionally, a size reduction (milling / grinding) step is carried out after the drying step.

Surprisingly, it has been found by including calcium carbonate in the tomato powder, the resultant powder can be used to enhance the rounded, rich and fruity tomato taste to savoury food products. It has been found that additionally, the calcium carbonate and tomato powder provides a sweet taste enhancement.

The tomato powder is preferably selected from the group consisting of hot break tomato powder, cold break tomato powder and combinations thereof. Hot break tomato powder is a powder produced by spray drying a tomato slurry that has been heated to temperatures in the range of 90-110°C. This rapid heating destroys enzymes which prevent decomposition of the pectin. Cold break tomato powder is a powder produced by spray drying a tomato slurry that has been heated to temperatures below 85°C, typically to a temperature in the range of 60-85°C. Preferably the tomato powder is a cold break or hot break tomato powder, most preferably the tomato powder is a hot break tomato powder.

In a preferred embodiment, at least 80 wt.%, more preferably at least 90 wt.%, even more preferably at least 95 wt.% of the tomato powder has a mesh size of less than 850 µm.

In a preferred embodiment, at least 70 wt.%, more preferably at least 80 wt.%, even more preferably at least 90 wt.%, most preferably at least 95 wt.% of the tomato powder has a mesh size of less than 600 µm.

In another preferred embodiment, at least 70 wt.% of said tomato powder has a mesh size of more than 50 µm, preferably more than 75 µm, even more preferably more than 100 µm. Preferably, at least 80 wt.% of said tomato powder has a mesh size of more than 50 µm, more preferably more than 75 µm, even more preferably more than 100 µm. Preferably, at least 90 wt.% of said tomato powder has a mesh size of more than 50 µm, more preferably more than 75 µm, even more preferably more than 100 µm.

In a preferred embodiment, at most 20 wt.%, more preferably at most 30 wt.%, even more preferably at most 40 wt.%, most preferably at most 50 wt.% of the tomato powder has a mesh size of less than 125 µm. Preferably, at most 20 wt.%, more preferably at most 30 wt.%, even more preferably at most 40 wt.%, most preferably at most 50 wt.% of the tomato powder has a mesh size of less than 150 µm.

Preferably, the tomato powder has a volume median grain diameter (D₅₀) in the range of 125-1000 µm, preferably the range of 150-850 µm, even more preferably in the range of 200-650 µm.

Preferably, the tomato powder has water content of at 0-15 wt.%, by weight of tomato powder, water, more preferably 1-10 wt.%, even more preferably 2-5 wt.% by weight of tomato powder, water, more preferably 1-10 wt.%. Preferably, the tomato powder comprises at most 10 wt.%, by weight of tomato powder, water, more preferably at most 5 wt.% water.

Preferably, the tomato powder is substantially free of silicon dioxide. By substantially free is meant that the tomato powder comprises less than 1 wt.%, preferably less than 0.5 wt. %, even more preferably less than 0.25 wt.% by weight of tomato powder, of silicon dioxide.

### Calcium carbonate powder

Preferably, the savoury, particulate composition comprises 0.75-4.5 wt.% by weight of the tomato powder, calcium carbonate powder, more preferably 1.0-4 wt.%, even more preferably 1.5-3 wt.% by weight of the tomato powder, calcium carbonate powder.

Preferably, the calcium carbonate particles have a volume median grain diameter (D₅₀) in the range of 0.5-40 µm, preferably the range of 1-30 µm, even more preferably in the range of 2-30 µm.

Preferably, the calcium carbonate does not contain nano-scale particles, e.g. particles with at least one dimension less than 200 nm. Typically, the calcium carbonate does not contain particles that have a number based median particle size D₅₀ of less than 200 nm. For determining the number based median particle size D₅₀ value, a Malvern Zetasizer Nano ZS can be used employing dynamic light scattering to determine the equivalent spherical hydrodynamic Stokes diameter.

In a preferred embodiment, the calcium carbonate powder has a specific surface area in the range of 1-200 m²/g, preferably in the range of 20-180 m²/g, even more preferably in the range of 30-160 m²/g, measured using nitrogen and the BET method according to ISO 9277:2010.

Preferably, the calcium carbonate is a natural calcium carbonate or precipitated calcium carbonate, preferably a natural calcium carbonate.

Natural calcium carbonate is obtained by milling, grinding or otherwise pulverising a material comprising calcium carbonate. Preferably the natural calcium carbonate is obtained from aragonite, calcite, chalk, limestone, marble, tavernite, vaterite and mixtures thereof. Examples of natural carbonates are Omya Calcipur^{®} 60 - KP, Omya Calcipur^{®} 70 - KP, Omya Calcipur^{®} 90 - KP and Omya Calcipur^{®} 110 - KP - KP, available from Omya International AG.

In another preferred embodiment, the natural calcium carbonate or the precipitated calcium carbonate is a surface-reacted calcium carbonate.

The term "surface-reacted calcium carbonate" as used herein refers to a calcium carbonate that is a reaction product of natural ground or precipitated calcium carbonate with carbon dioxide and at least one acid, wherein the carbon dioxide is formed in situ as a result of contacting the at least one acid with the natural ground or precipitated calcium carbonate and/or is supplied from an external source.

In a preferred embodiment, the calcium carbonate is a natural calcium carbonate. Natural calcium carbonates may comprise trace amounts of other salts and elements. Preferably, natural calcium carbonate comprises at least 95 wt.% calcium carbonate, more preferably at least 97 wt.% calcium carbonate and most preferably at least 99 wt.% calcium carbonate, by total weight of the calcium carbonate.

In preferred embodiments, the natural calcium carbonate comprises an element selected from the group consisting of magnesium, iron, aluminium and arsenic.

Preferably, the natural calcium carbonate comprises between 0.1-2 wt.% of magnesium carbonate by weight of natural calcium carbonate. Preferably, the natural calcium carbonate comprises between 0.5-1 wt.% of magnesium carbonate by weight of natural calcium carbonate.

Preferably, the natural calcium carbonate comprises between 0.01-1 wt.% of iron oxide by weight of natural calcium carbonate. Preferably, the natural calcium carbonate comprises between 0.05-0.51 wt.% of iron oxide by weight of natural calcium carbonate

Preferably, the natural calcium carbonate comprises between 10-50 ppm aluminium, more preferably, between 20-40 ppm aluminium.

Preferably, the natural calcium carbonate comprises between 1-50 ppm manganese, more preferably, between 5-25 ppm manganese.

Preferably, the natural calcium carbonate comprises between 0.01 ppm arsenic, more preferably, between 0.05-0.1 ppm arsenic.

Typically, a 1 wt.% aqueous solution of the savoury, particulate composition comprising tomato powder and 0.5-5 wt.%. calcium carbonate has a pH in the range of 4.5-6.5 at 25 °C.

Typically, a 10 wt.% aqueous solution of the savoury, particulate composition comprising tomato powder and 0.5-5 wt.% calcium carbonate has a pH in the range of 4.1-5.5 at 25 °C.

In a preferred embodiment, a 1 wt.% aqueous solution of the savoury, particulate composition defined herein has a pH at least 0.1 pH units higher than a corresponding tomato powder composition devoid of calcium carbonate, the pH being measured at 25 °C.

### Other ingredients

The savoury, particulate composition of the present invention preferably comprises 0-10 wt. % of water by weight of the composition. More preferably, the savoury, particulate composition of the present invention comprises 0.5-5 wt. % and most preferably the savoury, particulate composition comprises 1-3 wt. % of water by weight of the savoury, particulate composition.

In a preferred embodiment the composition comprises, c) 5-25 wt.%, by weight of the composition, edible acid, preferably 7-20 wt.% edible acid, more preferably 10-15 wt.% edible acid. The weight percentage of edible acid present in the composition according to the invention relates to the sum of the edible acid present in the tomato powder and additional edible acid that may be additionally present in the composition.

Unexpectedly, it was found that when the compositions according to the invention comprise a savoury powder comprising tomato powder, an edible acid(for example citric acid) and calcium carbonate, savoury food products can be prepared that have a sweeter taste profile, than comparative savoury food products that do not contain a tomato powder comprising calcium carbonate and edible acid.

The inventors have also found that the weight of sugar with respect to the weight of tomato powder in a savoury food product can be reduced by, for example at least 10 wt.%, preferably at least 20 wt.%, even more preferably at least 30 wt.% when a tomato and calcium carbonate powder according to the invention is included as an ingredient in the savoury food product.

Preferably, the edible acid is selected from the group consisting of ascorbic acid, acetic acid, citric acid, fumaric acid, gluconic acid, glucono delta lactone, lactic acid, malic acid, succinic acid, lemon juice, and combinations thereof, preferably wherein the edible acid is citric acid. The edible acid may also be provided from a source of edible acid. Preferably, said source of edible acid is a foodstuff, for example lemon juice.

### Savoury food product

In a preferred embodiment, the savoury, particulate composition as defined herein comprises:
d) 3-30 wt.%, by weight of the composition, edible salt selected from sodium chloride, potassium chloride and combinations thereof,
e) 0-50 wt.%, by weight of the composition, savoury taste giving ingredients selected from glutamate, 5'-ribonucleosides, sucrose, glucose, fructose, and combinations thereof,
f) 0-10 wt.%, by weight of the composition, starch component selected from starch, flour, maltodextrin and combinations thereof,
g) 0-60 wt.%, by weight of the composition, plant matter selected from vegetables, pulses, herbs, spices and combinations thereof,
h) 0-60 wt.%, by weight of the composition, fat,
wherein the combination of e)-i) comprises at least 50 wt.% of the composition.

The savoury, particulate composition of the present invention preferably comprises 5-25 wt.%, by weight of the composition, edible salt selected from sodium chloride, potassium chloride and combinations thereof, preferably 10-20 wt.% by weight of the composition, edible salt selected from sodium chloride, potassium chloride and combinations thereof.

The savoury, particulate composition of the present invention preferably comprises 0-40 wt.%, by weight of the composition, savoury taste giving ingredients selected from glutamate, 5'-ribonucleosides, sucrose, glucose, fructose, and combinations thereof, more preferably 0-30 wt.%, even more preferably 0-20, wt.%, most preferably by weight of the composition, savoury taste giving ingredients selected from glutamate, 5'-ribonucleosides, sucrose, glucose, fructose, and combinations thereof.

The savoury, particulate composition of the present invention preferably comprises 0-35 wt.% by weight of the savoury, particulate composition of sucrose, glucose and fructose. More preferably, the savoury, particulate composition comprises 0.5-25%, even more preferably 1-15%, and most preferably 2-10 wt.% by weight of the savoury, particulate composition of sucrose, glucose and fructose. The weight percentage of sucrose, glucose and fructose present in the composition of the present invention relates to the sum of the sucrose, glucose and fructose present in the tomato powder and any additional sucrose, glucose and fructose present in the composition.

The term "sugars" as used herein refers to one or more or all of sucrose, glucose and fructose.

In a preferred embodiment, the savoury particulate composition of the present invention comprises 0-15 wt.% lactose, by weight of the savoury, particulate composition more preferably 0.2-10 wt.% and most preferably 0.5-5 wt.% by weight of the savoury, particulate composition of lactose.

The savoury, particulate composition of the present invention preferably comprises 5-45% by weight of the composition of glutamate compound, more preferably comprises 10-40 wt.%, even more preferably 15-35 wt.%, and most preferably 20-30 wt.%, by weight of the composition of glutamate compound.

The glutamate compound in the savoury, particulate composition is preferably selected from glutamic acid, edible glutamate salts and combinations thereof. Suitable sources of a glutamate compound include yeast extracts, yeast auto-lysates, hydrolysed vegetable protein and combinations thereof.

The savoury, particulate composition of the present invention preferably comprises 0.1-20 wt.% starch compound by weight of the composition, more preferably comprises 0.2-15 wt.%, and most preferably 0.4-10 wt.%, by weight of the composition of starch compound.

The starch compound in the savoury, particulate composition is selected from native starch, pre-gelatinised starch, maltodextrin, modified starch and combinations thereof. Even more preferably, the starch is selected from native starch, pre-gelatinised starch and combinations thereof. Most preferably, the starch component is native starch.

In a preferred embodiment, the savoury particulate composition comprises 0-50 wt.%, by weight of the composition, plant matter selected from vegetables, pulses, herbs, spices and combinations thereof, more preferably 0-40 wt.%, even more preferably 0-30 wt.%.

Examples of sources of plant matter include parsley, dill, basil, chives, sage, rosemary, thyme, oregano, curcuma, leek, garlic, onion, pepper, celery, mushrooms, broccoli, cauliflower, tomato, courgette, asparagus, bell pepper, eggplant, cucumber, carrot, coconut flesh, galangal, ginger, lemon grass, and turnips. The plant matter may be applied in the form of leaves, slices, florets, dices or other pieces. The term "plant matter" as defined herein does not include the term "tomato powder" as defined herein.

The savoury particulate composition of the present invention preferably comprises 0.1-50 wt.% by weight of the savoury, particulate composition of fat, more preferably comprises 0.2-35 wt.%, and most preferably 0.4-30 wt.% by weight of the savoury, particulate composition of fat.

The fat employed in the savoury, particulate composition preferably is a vegetable fat. The term "vegetable fat" encompasses vegetable fats that have been fractionated and/or hydrogenated. Examples of vegetable fats that may suitably be used in the savoury concentrate include palm oil, palm kernel oil, coconut oil, sunflower oil, soybean oil, rapeseed oil, linseed oil, cottonseed oil, maize oil, olive oil and combinations thereof.

Preferably, the combination of d)-h) comprises at least 40 wt.% of the composition, more preferably at least 50 wt.%, even more preferably at least 70 wt.%, yet more preferably at least 80 wt.% of the composition.

In a preferred embodiment, the composition of the present invention comprises:
- 5-50 wt.%, by weight of the composition, of a savoury powder comprising:
   a) 80-99 wt.% tomato powder, wherein at least 70 wt.% of said tomato powder has a mesh size of less than 850 µm, and
   b) 0.5-5 wt.%, by weight tomato powder, calcium carbonate powder, said calcium carbonate powder having a volume median grain diameter (D₅₀) of 0.1-50 µm, and other food ingredients.

Preferably, the savoury, particulate composition is a savoury, particulate food product comprising:
a) 15-70 wt.%, by weight of the composition, tomato powder, wherein at least 70 wt.% of said tomato powder has a mesh size of less than 850 µm,
b) 1.5-2.5 wt.%, by weight of the tomato powder, calcium carbonate powder having a volume median grain diameter (D50) of 0.1-50 µm,
c) 1-15 wt.% by weight of the composition, edible acid,
d) 5-15 wt.%, by weight of the composition, edible salt selected from sodium chloride, potassium chloride and combinations thereof,
e) 5-10 wt.% by weight of the composition, savoury taste giving ingredients selected from glutamate, 5'-ribonucleosides, sucrose, glucose, fructose, and combinations thereof,
f) 2-7 wt.%, by weight of the composition, starch component selected from starch, flour, maltodextrin and combinations thereof,
g) 2-10 wt.%, by weight of the composition, plant matter selected from vegetables, pulses, herbs, spices and combinations thereof,
h) 1-5 wt.%, by weight of the composition, fat.

Preferably, the savoury, particulate composition is a savoury, particulate food product comprising:
a) 40-70 wt.%, by weight of the composition, tomato powder, wherein at least 70 wt.% of said tomato powder has a mesh size of less than 850 µm,
b) 1.5-2.5 wt.%, by weight of the tomato powder, calcium carbonate powder having a volume median grain diameter (D50) of 0.1-50 µm,
c) 1-15 wt.% by weight of the composition, edible acid,
d) 5-15 wt.%, by weight of the composition, edible salt selected from sodium chloride, potassium chloride and combinations thereof,
e) 5-10 wt.% by weight of the composition, savoury taste giving ingredients selected from glutamate, 5'-ribonucleosides, sucrose, glucose, fructose, and combinations thereof,
f) 2-5 wt.%, by weight of the composition, starch component selected from starch, flour, maltodextrin and combinations thereof,
g) 5-10 wt.%, by weight of the composition, plant matter selected from vegetables, pulses, herbs, spices and combinations thereof,
h) 1-3 wt.%, by weight of the composition, fat.

Preferably, the savoury, particulate composition is a savoury, particulate food product comprising:
a) 5-50 wt.%, by weight of the composition, tomato powder, wherein at least 70 wt.% of said tomato powder has a mesh size of less than 850 µm,
b) 1.5-2.5 wt.%, by weight of the composition, calcium carbonate powder having a volume median grain diameter (D50) of 0.1-50 µm,
c) 1-15 wt.% by weight of the composition, edible acid,
d) 2-15 wt.%, by weight of the composition, edible salt selected from sodium chloride, potassium chloride and combinations thereof,
e) 0.5-10 wt.% by weight of the composition, savoury taste giving ingredients selected from glutamate, 5'-ribonucleosides, sucrose, glucose, fructose, and combinations thereof,
f) 1-5 wt.%, by weight of the composition, starch component selected from starch, flour, maltodextrin and combinations thereof,
g) 5-10 wt.%, by weight of the composition, plant matter selected from vegetables, pulses, herbs, spices and combinations thereof,
h) 1-3 wt.%, by weight of the composition, fat.

Preferably, the composition according to the present invention is a savoury, particulate food product selected from the group consisting of soup, sauce, condiment, bouillon, seasoning and gravy.

In a second aspect, the present invention relates to a process for preparing a savoury, particulate composition, said process comprising combining 100 parts by weight of tomato powder with 0.5 to 6 parts by weight of calcium carbonate powder, wherein at least 70 wt.% of said tomato powder has a mesh size of less than 850 µm, and said calcium carbonate powder having a volume median grain diameter (D₅₀) of 0.1-50 µm.

It has been found that by providing a tomato powder including calcium carbonate in a process for preparing a savoury particulate composition, for example a savoury food product, the savoury food product obtained has an improved rich and fruity tomato flavour, also described as being a "rounded" flavour, as opposed to "bland" taste attribute.

In a third aspect, the present invention relates to a process for preparing a savoury, particulate composition, said process comprising the steps of:
i) providing 5-50 wt.%, by weight of the composition, savoury powder comprising:
   a) 80-99 wt.% tomato powder, wherein at least 70 wt.% of said tomato powder has a mesh size of less than 850 µm, and
   b) 0.5-5 wt.%, by weight tomato powder, calcium carbonate powder, said calcium carbonate powder having a volume median grain diameter (D₅₀) of 0.1-50 µm,
ii) mixing the powder of step i) with 5-70 parts by weight particulate food ingredients to provide a savoury particulate composition, preferably the particulate food ingredients being selected from:
   - 3-30 wt.% by weight of the composition, edible salt selected from sodium chloride, potassium chloride and combinations thereof,
   - 0-50 wt.% by weight of the composition, savoury taste giving ingredients selected from glutamate, 5'-ribonucleosides, sucrose, glucose, fructose and combinations thereof,
   - 0-10 wt.%, by weight of the composition, starch component selected from starch, flour, maltodextrin and combinations thereof,
   - 0-60 wt.%, by weight of the composition, plant matter selected from vegetables, pulses, herbs, spices and combinations thereof,
   - 0-60 wt.%, by weight of the composition, fat.

The preferred embodiments described for the savoury, particulate composition described herein apply *mutatis mutandis* to the process of the present invention.

In a preferred embodiment, step i) of the process according to the present invention comprises adding c) 0.1-20 parts by weight edible acid, preferably 1-15 parts by weight, preferably 5-10 parts by weight edible acid

In a preferred embodiment, step i) of the process according to the present invention comprises adding c) 0.1-20 wt.% by weight of the tomato powder, edible acid, preferably 0.1-15 wt.%, preferably 0.1-5 wt.% by weight of the tomato powder, edible acid.

Unexpectedly, it was found that providing an edible acid in the process according to the invention provides savoury particulate compositions that can be used to prepare savoury food products that have a sweeter taste profile, than comparative savoury food products that do not contain a tomato powder comprising calcium carbonate and edible acid.

The inventors have also found that the weight of additional sugar with respect to the weight of tomato powder in a savoury food product can be reduced by, for example at least 10 wt.%, preferably at least 20 wt.%, even more preferably at least 30 wt.% when a tomato and calcium carbonate powder to which 0.1-1 wt.% edible acid is added, by weight of tomato powder, is included as an ingredient in the savoury food product.

In a preferred embodiment, the particulate food ingredients added in step ii) of the process according to the invention are selected from:
- 3-30 wt.% by weight of the composition, edible salt selected from sodium chloride, potassium chloride and combinations thereof,
- 0-50 wt.% by weight of the composition, savoury taste giving ingredients selected from glutamate, 5'-ribonucleosides, sucrose, glucose, fructose and combinations thereof,
- 0-10 wt.%, by weight of the composition, starch component selected from starch, flour, maltodextrin and combinations thereof,
- 0-60 wt.%, by weight of the composition, plant matter selected from vegetables, pulses, herbs, spices and combinations thereof,
- 0-60 wt.%, by weight of the composition, fat.

Preferably, step ii) of the process of the present invention comprises the combining of the following ingredients:
- 5-15 wt.%, by weight of the composition, edible salt selected from sodium chloride, potassium chloride and combinations thereof,
- 5-15 wt.% by weight of the composition, savoury taste giving ingredients selected from glutamate, 5'-ribonucleosides, sucrose, glucose, fructose, and combinations thereof,
- 2-7 wt.%, by weight of the composition, starch component selected from starch, flour, maltodextrin and combinations thereof,
- 20-40 wt.%, by weight of the composition, plant matter selected from vegetables, pulses, herbs, spices and combinations thereof,
- 1-5 wt.%, by weight of the composition , fat.

In a fourth aspect, the present invention also relates to a savoury, particulate composition as defined herein obtainable by a process described herein.

In a preferred embodiment, there is provided a savoury, particulate composition having a water content of not more than 15 wt.% comprising:
- 5-99 wt.%, by weight of the composition, tomato powder, wherein at least 70 wt.% of said tomato powder has a mesh size of less than 850 µm,
- 0.5-5 wt.%, by weight of the tomato powder, calcium carbonate powder, said calcium carbonate powder having a volume median grain diameter (D50) of 0.1-50 µm,
the savoury, particulate composition being obtainable by a process described herein.

In another preferred embodiment, there is provided a savoury, particulate composition having a water content of not more than 15 wt.% comprising
- 5-99 wt.%, by weight of the composition, tomato powder, wherein at least 70 wt.% of said tomato powder has a mesh size of less than 850 µm,
- 0.5-5 wt.%, by weight of the tomato powder, calcium carbonate powder, said calcium carbonate powder having a volume median grain diameter (D50) of 0.1-50 µm,
the savoury, particulate composition being obtainable by a process comprising the steps of:
- combining 100 parts by weight of tomato powder with 0.5 to 6 parts by weight of calcium carbonate powder,
- wherein at least 70 wt.% of said tomato powder has a mesh size of less than 850 µm, and said calcium carbonate powder having a volume median grain diameter (D₅₀) of 0.1-50 µm.

In another preferred embodiment, there is provided a savoury, particulate composition having a water content of not more than 15 wt.% comprising
- 5-99 wt.%, by weight of the composition, tomato powder, wherein at least 70 wt.% of said tomato powder has a mesh size of less than 850 µm,
- 0.5-5 wt.%, by weight of the tomato powder, calcium carbonate powder, said calcium carbonate powder having a volume median grain diameter (D50) of 0.1-50 µm,
the savoury, particulate composition being obtainable by a process comprising the steps of:
- combining 100 parts by weight of tomato powder with 0.5 to 6 parts by weight of calcium carbonate powder and with 0.1-20 parts by weight of the tomato powder, edible acid.

In a fifth aspect, the present invention relates to a method for preparing a sauce, soup, condiment or gravy, said method comprising combining 10 parts of the particulate, savoury particulate composition described herein, or obtainable by the process described herein, with 5-200 parts of an aqueous liquid to obtain a mixture.

In a sixth aspect, the present invention relates to the use of calcium carbonate as an enhancer of rounded, rich and fruity taste notes of compositions comprising tomato powder.

Unexpectedly, the presence of 0.5-5 wt.%, by weight of tomato powder, calcium carbonate in the tomato powder provides a flavour enhancement of the rounded, rich and fruity taste notes of tomato powder comprising compositions.

In a seventh aspect, the present invention relates to the use of the combination of calcium carbonate and citric acid as an enhancer of rounded, sweet flavour taste notes of compositions comprising tomato powder. It has been found that inclusion of a tomato powder that includes both calcium carbonate and citric acid give the resultant food product a pleasing sweet taste, even when less sugar than typically used is added to a food product. By less is meant, at least 10 wt.% less sugar.

The invention shall now be illustrated by the further non-limiting examples.

### Examples

### Example 1

Aqueous solutions made from tomato powder were prepared as model recipes according to the following recipe: 30 g tomato powder (Organic Tomato Powder, Agraz, Spain) was dissolved in 500 g water. As a reference, standard tomato powder with 1 % silicon dioxide was used (Tomato Powder Hot Break, Agraz, Spain), sucrose (Suedzucker Aktiengesellschaft Germany) and citric acid (anhydrous, granular, Jungbunzlauer, Germany) being added in the amounts given in Table 1. The mixtures were mixed in a Kenwood mixer for 3-5 minutes at a speed setting 3-4.

**Table 1**

| **Composition** | **A** | **B** | **C** | **D** | **E** | **1** | **2** |
|---|---|---|---|---|---|---|---|
| Tomato powder^{a} | 100 | 99 | 98 | 98.8 | 99.8 | 98 | 97.8 |
| SiO₂ | 0 | 1 | 0 | 1 | 0 | 0 | 0 |
| CaCO₃^{b} | 0 | 0 | 0 | 0 | 0 | 2 | 2 |
| Sucrose^{c} | 0 | 0 | 2 | 0 | 0 | 0 | 0 |
| Citric acid | 0 | 0 | 0 | 0.2 | 0.2 | 0 | 0.2 |

| | | | | | | | |
|---|---|---|---|---|---|---|---|
| ^{a}: particle size distribution: D10: 75 µm; D90: 850 µm. ^{b}: particle size distribution: D50: 5.5 µm; ^{c}: particle size distribution: D10: 315 µm; D90: 1.25 mm. | | | | | | | |

A taste test panel was conducted to assess the taste profile of the compositions shown in Table 1. The results are shown in Table 2.

**Table 2**

| | **A** | **B** | **C** | **D** | **E** | **1** | **2** |
|---|---|---|---|---|---|---|---|
| Dominant taste attribute | Sour | Sweet/ sour | Sweet/ sour | Sweet/ sour | Most sour | Sweet | Most sweet |
| Mouthfeel | Umami, not long lasting | Umami with bitter notes | Umami | Bitter notes | Bitter hint, dry feel | Rounded, rich and fruity | Rounded, rich and fruity, velvety |

### Example 2

Aqueous solutions of tomato powder and calcium carbonate were prepared according to the method of example 1. Sample A is a comparative example that was prepared using a tomato powder that did not contain calcium carbonate, while samples F and G are comparative examples with low amounts of calcium carbonate. Samples 3 and 4 correspond to compositions of the present invention, with each composition included a different amount of calcium carbonate, as indicated in Table 3.

**Table 3**

| | **Sample** | | | | |
|---|---|---|---|---|---|
| | **A** | **F** | **G** | **3** | **4** |
| CaCO₃ / wt.% | 0 | 0.1 | 0.415 | 1 | 2 |
| pH 6.75 wt.% solution | 4.08 | 4,23 | 4.33 | 4.48 | 4.73 |

A taste test panel was conducted to assess the taste profile of the compositions shown in Table 3. The results are shown in Table 4.

**Table 4**

| | **A** | **F** | **G** | **3** | **4** |
|---|---|---|---|---|---|
| Mouthfeel | Bland tomato | Bland tomato | Bland tomato | Rounded rich and fruity | Rounded, rich & fruit |
| Dominant taste attribute | Sour | Sour | Sour | Sweet hint | Sweet |
| Umami | ++ | ++ | + | - | - - |

The compositions according to the invention (samples 3 and 4) were recognized by a rounded, rich and fruity mouthfeel with a dominant sweet taste attribute.

### Example 3

Aqueous solutions of tomato powder (Organic Tomato Powder, Agraz, Spain) and calcium carbonate (Omya International AG) were prepared according to the method of example 1, with each sample 5-8 containing 2 wt.% calcium carbonate having a particle size as shown in Table 5.

**Table 5**

| | A | 5 | 6 | 7 | 8 |
|---|---|---|---|---|---|
| CaCOs particle size / µm | 0 | 13^{a} | 5.5^{b} | 3^{c} | 2^{d} |

| | | | | | |
|---|---|---|---|---|---|
| ^{a}: Omya Calcipur 60-KP; ^{b}: Omya Calcipur 70-KP; ^{c}: Omya Calcipur 90-KP; ^{d}: Omya Calcipur 110-KP | | | | | |

A taste test panel was conducted to assess the taste profile of the compositions shown in Table 5. Comparative example A had a sour taste whereas samples 5-8 had a rounded, rich and fruity taste.

### Example 4

Tomato model recipes were prepared according to the following general recipe in Table 6.

**Table 6**

| **Ingredient** | **Wt. %** | **g** |
|---|---|---|
| Garlic Powder | 1,54 | 7,69 |
| Hot break tomato powder (100% tomato powder) | 30,74 | 153,70 |
| Paprika, sweet | 0,61 | 3,07 |
| Onion White AD | 6,15 | 30,74 |
| Salt | 4,61 | 23,06 |
| Sucrose | 4,61 | 23,06 |
| Yeast^{a} | 7,69 | 38,43 |
| Corn Starch ( Maize ) Native 12% | 18,44 | 92,22 |
| Wheat Flour T 550 Native Dried <8% | 24,59 | 122,96 |

| | | |
|---|---|---|
| ^{a}: comprises 18wt.% NaCl | | |

63 g of the above recipe was mixed with 500 mL water and mixed in a Kenwood mixer for 3-5 minutes.

The effect of altering the sugar content of the tomato model recipe in the presence / absence of calcium carbonate and/or citric acid was tested by preparing samples H, 9-12 according to the recipes shown in Table 7.

**Table 7**

| | **Sample** | | | | |
|---|---|---|---|---|---|
| | **H** | **9** | **10** | **11** | **12** |
| CaCO₃ / wt.% (w.r.t. tomato powder) | 0 | 2 | 2 | 2 | 2 |
| Sugar wt.% (w.r.t. tomato powder) | 15 | 15 | 15 | 9.75 | 9.75 |
| Citric acid (w.r.t. tomato powder) | 0 | 0 | 0.2 | 0 | 0.2 |

A taste test panel was conducted to assess the taste profile of the compositions shown in Table 7. The results of the taste test panel are shown in Table 9.

**Table 8**

| | | | | | |
|---|---|---|---|---|---|
| Taste | H | 9 | 10 | 11 | 12 |
| Sweet | + | +++ | ++ | ++ | + |
| Sour | ++ | - | + | + | ++ |

Sample 11 and 12 that comprise 2 wt.% calcium carbonate have at least the same, or a more sweet profile than the comparative sample H that lacks calcium carbonate. In addition, inclusion of citric acid (sample 12) provides a sweet taste attribute yet has a reduced sugar content, based on the weight of tomato powder.

### Example 5

Three tomato mixes were prepared as indicated in Table 9:

**Table 9**

| | A | B | C |
|---|---|---|---|
| Tomato powder (Organic Tomato Powder, Agraz, Spain | 98.9 | 97.8 | 96.7 |
| CaCO₃ powder (Omya Calcipur 70-KP)_ | 1 | 2 | 3 |
| citric acid | 0.1 | 0.2 | 0.3 |
| | 100 | 100 | 100 |

| | | | |
|---|---|---|---|
| Tomato model recipes (ingredients as above) were prepared according to the following tables. The recipes were prepared by adding 126 g of sample recipe to 1000 mL of water and bringing the mixture to the boil. Samples were placed in a bowl for testing by the expert panel tasting (n=11). | | | |

**Table 10**

| | | |
|---|---|---|
| Ingredient | 13 | I |
| Salt | 4.61 | 4.61 |
| Sucrose | 14.62 | 14.62 |
| Tomato Mix A | 30.74 | 0 |
| Tomato only | 0 | 30.74 |
| Spices | 8.3 | 8.3 |
| Yeast | 7.69 | 7.69 |
| StarchComponent^{a} | 34.04 | 34.04 |
| | 100 | 100 |

| | | |
|---|---|---|
| ^{a}: corn starch & wheat flour | | |

Compositions 13 was found to have a sweeter taste than composition I (comparative).

**Table 11**

| Ingredient | 14 | 15 | J |
|---|---|---|---|
| Salt | 4.61 | 4.61 | 4.61 |
| Sucrose | 9.75 | 0 | 9.75 |
| Xylitol | 0 | 9.75 | 0 |
| Tomato Mix B | 30.74 | 30.74 | 0 |
| Tomato only | 0 | 0 | 30.74 |
| Spices | 8.3 | 8.3 | 8.3 |
| Yeast | 7.69 | 7.69 | 7.69 |
| Starch Component | 38.91 | 38.91 | 38.91 |
| | 100 | 100 | 100 |

| | | | |
|---|---|---|---|
| ^{a}: corn starch & wheat flour | | | |

Compositions 14 and 15 were found to be sweeter than composition K (comparative).

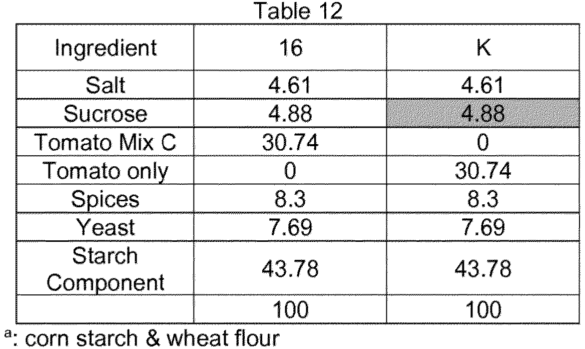

Composition 16 was found to be sweeter than composition K (comparative).

## Claims

1. A savoury, particulate composition having a water content of not more than 15 wt.% and comprising:
a) 5-99 wt.%, by weight of the composition, tomato powder, wherein at least 70 wt.% of said tomato powder has a mesh size of less than 850 µm,
b) 0.5-5 wt.%, by weight of the tomato powder, calcium carbonate powder, said calcium carbonate powder having a volume median grain diameter (D₅₀) of 0.1-50 µm.

2. Savoury, particulate composition according to claim 1, wherein at least 70 wt.% of said tomato powder has a mesh size of more than 50 µm, preferably more than 75 µm, even more preferably more than 100 µm.

3. Savoury, particulate composition according to claim 1 or claim 2, wherein the calcium carbonate powder has a volume median grain diameter (D₅₀) in the range of 0.5-40 µm, preferably the range of 1-30 µm, even more preferably in the range of 2-30 µm.

4. Savoury, particulate composition according to any one of the previous claims, wherein the calcium carbonate powder has a specific surface area in the range of 1-200 m²/g, preferably in the range of 20-180 m²/g, even more preferably in the range of 30-160 -200 m²/g, measured using nitrogen and the BET method according to ISO 9277:2010.

5. Savoury, particulate composition according to any one of the previous claims, wherein the composition comprises c) 5-25 wt.%, by weight of the composition, edible acid, preferably 7-20 wt.% edible acid, more preferably 10-15 wt.%, by weight of the composition, edible acid.

6. Savoury, particulate composition according to claim 5, wherein the edible acid is selected from the group consisting of ascorbic acid, acetic acid, citric acid, fumaric acid, gluconic acid, glucono delta lactone, lactic acid, malic acid, succinic acid, lemon juice, and combinations thereof, preferably wherein the edible acid is citric acid.

7. Savoury, particulate composition according to any one of the previous claims, wherein a 1 wt.% aqueous solution of the savoury, particulate composition has a pH in the range of 4.5-6.5 at 25 °C.

8. Savoury, particulate composition according to any one of the previous claims comprising:
d) 3-30 wt.%, by weight of the composition, edible salt selected from sodium chloride, potassium chloride and combinations thereof,
e) 0-50 wt.%, by weight of the composition, savoury taste giving ingredients selected from glutamate, 5'-ribonucleosides, sucrose, glucose, fructose, and combinations thereof,
f) 0-10 wt.%, by weight of the composition, starch component selected from starch, flour, maltodextrin and combinations thereof,
g) 0-60 wt.%, by weight of the composition, plant matter selected from vegetables, pulses, herbs, spices and combinations thereof,
h) 0-60 wt.%, by weight of the composition, fat,
wherein the combination of d)-h) comprises at least 30 wt.% of the composition.

9. Savoury, particulate composition according to any one of the previous claims comprising:
a) 15-40 wt.%, by weight of the composition, of the tomato powder,
b) 1.5-2.5 wt.%, by weight of the tomato powder, of the calcium carbonate powder,
c) 1-15 wt.% by weight of the composition, edible acid, preferably citric acid,
d) 5-15 wt.%, by weight of the composition, edible salt selected from sodium chloride, potassium chloride and combinations thereof,
e) 5-15 wt.% by weight of the composition, savoury taste giving ingredients selected from glutamate, 5'-ribonucleosides, sucrose, glucose, fructose, and combinations thereof,
f) 2-7 wt.%, by weight of the composition, starch component selected from starch, flour, maltodextrin and combinations thereof,
g) 20-40 wt.%, by weight of the composition, plant matter selected from vegetables, pulses, herbs, spices and combinations thereof,
h) 1-5 wt.%, by weight of the savoury food product, fat.

10. Savoury, particulate composition according to claim 8 or 9, wherein the composition is a savoury, particulate food product selected from the group consisting of soup, sauce, condiment, bouillon, seasoning and gravy.

11. A process for preparing a savoury, particulate composition, said process comprising combining 100 parts by weight of tomato powder with 0.5 to 6 parts by weight of calcium carbonate powder, wherein at least 70 wt.% of said tomato powder has a mesh size of less than 850 µm, and said calcium carbonate powder having a volume median grain diameter (D₅₀) of 0.1-50 µm.

12. A process for preparing a savoury, particulate composition, said process comprising the steps of:
i) providing 5-50 wt.%, by weight of the composition, of a savoury powder comprising:
a) 80-99 wt.% tomato powder, wherein at least 70 wt.% of said tomato powder has a mesh size of less than 850 µm and
b) 0.5-5 wt.%, by weight tomato powder, calcium carbonate powder, said calcium carbonate powder having a volume median grain diameter (D₅₀) of 0.1-50 µm,
ii) mixing the powder of step i) with 5-70 parts by weight particulate food ingredients to provide a savoury particulate composition, preferably the particulate food ingredients being selected from:
• 3-30 wt.% by weight of the composition, edible salt selected from sodium chloride, potassium chloride and combinations thereof,
• 0-50 wt.% by weight of the composition, savoury taste giving ingredients selected from glutamate, 5'-ribonucleosides, sucrose, glucose, fructose and combinations thereof,
• 0-10 wt.%, by weight of the composition, starch component selected from starch, flour, maltodextrin and combinations thereof,
• 0-60 wt.%, by weight of the composition, plant matter selected from vegetables, pulses, herbs, spices and combinations thereof,
• 0-60 wt.%, by weight of the composition, fat.

13. Process according to claim 12, wherein step ii) comprises the mixing of the following ingredients:
• 5-15 wt.%, by weight of the composition, edible salt selected from sodium chloride, potassium chloride and combinations thereof,
• 5-15 wt.% by weight of the composition, savoury taste giving ingredients selected from glutamate, 5'-ribonucleosides, sucrose, glucose, fructose, and combinations thereof,
• 2-7 wt.%, by weight of the composition, starch component selected from starch, flour, maltodextrin and combinations thereof,
• 20-40 wt.%, by weight of the composition, plant matter selected from vegetables, pulses, herbs, spices and combinations thereof,
• 1-5 wt.%, by weight of the savoury food product, fat.

14. A method for preparing a sauce, soup, condiment or gravy, said method comprising mixing 10 parts of the particulate, savoury particulate composition according to claims 1-10, with 5-200 parts of an aqueous liquid.

15. Use of calcium carbonate as an enhancer of sweet, fruity taste notes of compositions comprising tomato powder.

16. Use of a combination of calcium carbonate and citric acid as an enhancer of rounded, sweet flavour taste notes of compositions comprising tomato powder.

## Patentansprüche

1. Schmackhafte teilchenförmige Zusammensetzung mit einem Wassergehalt von nicht mehr als 15 Gew.-% und umfassend:
a) 5-99 Gew.-%, bezogen auf das Gewicht der Zusammensetzung, Tomatenpulver, wobei mindestens 70 Gew.-% des Tomatenpulvers eine Maschenweite von weniger als 850 µm aufweisen,
b) 0,5-5 Gew.-%, bezogen auf das Gewicht des Tomatenpulvers, Calciumcarbonatpulver, wobei das Calciumcarbonatpulver einen volumenbezogenen mittleren Korndurchmesser (D₅₀) von 0,1-50 µm aufweist.

2. Schmackhafte teilchenförmige Zusammensetzung nach Anspruch 1, wobei mindestens 70 Gew.-% des Tomatenpulvers eine Maschenweite von mehr als 50 µm, bevorzugt von mehr als 75 µm, noch bevorzugter von mehr als 100 µm, aufweisen.

3. Schmackhafte teilchenförmige Zusammensetzung nach Anspruch 1 oder Anspruch 2, wobei das Calciumcarbonatpulver einen volumenbezogenen mittleren Korndurchmesser (D₅₀) in dem Bereich von 0,5-40 µm, bevorzugt in dem Bereich von 1-30 µm, noch bevorzugter in dem Bereich von 2-30 µm aufweist.

4. Schmackhafte teilchenförmige Zusammensetzung nach irgendeinem der vorhergehenden Ansprüche, wobei das Calciumcarbonatpulver eine spezifische Oberfläche in dem Bereich von 1-200 m²/g, bevorzugt in dem Bereich von 20-180 m²/g, noch bevorzugter in dem Bereich von 30-160-200 m²/g, gemessen unter Verwendung von Stickstoff und der BET-Methode gemäß ISO 9277:2010.

5. Schmackhafte teilchenförmige Zusammensetzung nach irgendeinem der vorhergehenden Ansprüche, wobei die Zusammensetzung umfasst c) 5-25 Gew.-%, bezogen auf das Gewicht der Zusammensetzung, essbare Säure, bevorzugt 7-20 Gew.-% essbare Säure, bevorzugter 10-15 Gew.-%, bezogen auf das Gewicht der Zusammensetzung, essbare Säure.

6. Schmackhafte teilchenförmige Zusammensetzung nach Anspruch 5, wobei die essbare Säure aus der Gruppe, bestehend aus Ascorbinsäure, Essigsäure, Citronensäure, Fumarsäure, Gluconsäure, Glucon-Delta-Lacton, Milchsäure, Äpfelsäure, Bernsteinsäure, Zitronensaft und Kombinationen davon, ausgewählt ist, wobei die Essigsäure vorzugsweise Citronensäure ist.

7. Schmackhafte teilchenförmige Zusammensetzung nach irgendeinem der vorhergehenden Ansprüche, wobei eine 1 gew.-%-ige wässrige Lösung der schmackhaften teilchenförmigen Zusammensetzung bei 25°C einen pH-Wert in dem Bereich von 4,5-6,5 aufweist.

8. Schmackhafte teilchenförmige Zusammensetzung nach irgendeinem der vorhergehenden Ansprüche, umfassend:
d) 3-30 Gew.-%, bezogen auf das Gewicht der Zusammensetzung, essbares Salz, ausgewählt unter Natriumchlorid, Kaliumchlorid und Kombinationen davon,
e) 0-50 Gew.-%, bezogen auf das Gewicht der Zusammensetzung, pikanten Geschmack gebende Zutaten, ausgewählt unter Glutamat, 5'-Ribonucleosiden, Saccharose, Glucose, Fructose und Kombinationen davon,
f) 0-10 Gew.-%, bezogen auf das Gewicht der Zusammensetzung, Stärkekomponente, ausgewählt unter Stärke, Mehl, Maltodextrin und Kombinationen davon,
g) 0-60 Gew.-%, bezogen auf das Gewicht der Zusammensetzung, Pflanzenmaterial, ausgewählt unter Gemüse, Hülsenfrüchten, Kräutern, Gewürzen und Kombinationen davon,
h) 0-60 Gew.-%, bezogen auf das Gewicht der Zusammensetzung, Fett,
wobei die Kombination von d)-h) mindestens 30 Gew.-% der Zusammensetzung umfasst.

9. Schmackhafte teilchenförmige Zusammensetzung nach irgendeinem der vorhergehenden Ansprüche, umfassend:
a) 15-40 Gew.-%, bezogen auf das Gewicht der Zusammensetzung, Tomatenpulver,
b) 1,5-2,5 Gew.-%, bezogen auf das Gewicht des Tomatenpulvers, Calciumcarbonatpulver,
c) 1-15 Gew.-%, bezogen auf das Gewicht der Zusammensetzung, essbare Säure, bevorzugt Citronensäure,
d) 5-15 Gew.-%, bezogen auf das Gewicht der Zusammensetzung, essbares Salz, ausgewählt unter Natriumchlorid, Kaliumchlorid und Kombinationen davon,
e) 5-15 Gew.-%, bezogen auf das Gewicht der Zusammensetzung, pikanten Geschmack gebende Zutaten, ausgewählt unter Glutamat, 5'-Ribonucleosiden, Saccharose, Glucose, Fructose und Kombinationen davon,
f) 2-7 Gew.-%, bezogen auf das Gewicht der Zusammensetzung, Stärkekomponente, ausgewählt unter Stärke, Mehl, Maltodextrin und Kombinationen davon,
g) 20-40 Gew.-%, bezogen auf das Gewicht der Zusammensetzung, Pflanzenmaterial, ausgewählt unter Gemüse, Hülsenfrüchten, Kräutern, Gewürzen und Kombinationen davon,
h) 1-5 Gew.-%, bezogen auf das Gewicht des schmackhaften Lebensmittelprodukts, Fett.

10. Schmackhafte teilchenförmige Zusammensetzung nach Anspruch 8 oder 9, wobei die Zusammensetzung ein schmackhaftes teilchenförmiges Lebensmittelprodukt ist, ausgewählt aus der Gruppe, bestehend aus Suppe, Soße, Gewürzen, Bouillon, Würzmitteln und Bratensoße.

11. Verfahren zur Herstellung einer schmackhaften teilchenförmigen Zusammensetzung, wobei das Verfahren das Kombinieren von 100 Gewichtsteilen Tomatenpulver mit 0,5 bis 6 Gewichtsteilen Calciumcarbonatpulver umfasst, wobei mindestens 70 Gew.-% des Tomatenpulvers eine Maschenweite von weniger als 850 µm aufweisen und das Calciumcarbonatpulver einen volumenbezogenen mittleren Korndurchmesser (D₅₀) von 0,1-50 µm aufweist.

12. Verfahren zur Herstellung einer schmackhaften teilchenförmigen Zusammensetzung, wobei das Verfahren die Schritte umfasst:
i) Bereitstellen von 5-50 Gew.-%, bezogen auf das Gewicht der Zusammensetzung, eines schmackhaften Pulvers, umfassend:
a) 80-99 Gew.-% Tomatenpulver, wobei mindestens 70 Gew.-% des Tomatenpulvers eine Maschenweite von weniger als 850 µm aufweisen, und
b) 0,5-5 Gew.-%, bezogen auf das Gewicht des Tomatenpulvers, Calciumcarbonatpulver, wobei das Calciumcarbonatpulver einen volumenbezogenen mittleren Korndurchmesser (D₅₀) von 0,1-50 µm aufweist,
ii) Mischen des Pulvers des Schritts i) mit 5-70 Gewichtsteilen teilchenförmiger Lebensmittelzutaten, um eine schmackhafte teilchenförmige Zusammensetzung bereitzustellen, wobei die teilchenförmigen Lebensmittelzutaten bevorzugt ausgewählt sind unter:
• 3-30 Gew.-%, bezogen auf das Gewicht der Zusammensetzung, essbares Salz, ausgewählt unter Natriumchlorid, Kaliumchlorid und Kombinationen davon,
• 0-50 Gew.-%, bezogen auf das Gewicht der Zusammensetzung, pikanten Geschmack gebende Zutaten, ausgewählt unter Glutamat, 5'-Ribonucleosiden, Saccharose, Glucose, Fructose und Kombinationen davon,
• 0-10 Gew.-%, bezogen auf das Gewicht der Zusammensetzung, Stärkekomponenten, ausgewählt unter Stärke, Mehl, Maltodextrin und Kombinationen davon,
• 0-60 Gew.-%, bezogen auf das Gewicht der Zusammensetzung, Pflanzenmaterial, ausgewählt unter Gemüse, Hülsenfrüchten, Kräutern, Gewürzen und Kombinationen davon,
• 0-60 Gew.-%, bezogen auf das Gewicht der Zusammensetzung, Fett.

13. Verfahren nach Anspruch 12, wobei der Schritt ii) das Mischen der folgenden Zutaten umfasst:
• 5-15 Gew.-%, bezogen auf das Gewicht der Zusammensetzung, essbares Salz, ausgewählt unter Natriumchlorid, Kaliumchlorid und Kombinationen davon,
• 5-15 Gew.-%, bezogen auf das Gewicht der Zusammensetzung, pikanten Geschmack gebende Zutaten, ausgewählt unter Glutamat, 5'-Ribonucleosiden, Saccharose, Glucose, Fructose und Kombinationen davon,
• 2-7 Gew.-%, bezogen auf das Gewicht der Zusammensetzung, Stärkekomponente, ausgewählt unter Stärke, Mehl, Maltodextrin und Kombinationen davon,
• 20-40 Gew.-%, bezogen auf das Gewicht der Zusammensetzung, Pflanzenmaterial, ausgewählt unter Gemüse, Hülsenfrüchten, Kräutern, Gewürzen und Kombinationen davon,
• 1-5 Gew.-%, bezogen auf das Gewicht des schmackhaften Lebensmittelprodukts, Fett.

14. Verfahren zur Herstellung einer Soße, Suppe, Würze oder Bratensoße, wobei das Verfahren das Mischen von 10 Teilen der schmackhaften teilchenförmigen Zusammensetzung nach den Ansprüchen 1-10 mit 5-200 Teilen einer wässrigen Flüssigkeit umfasst.

15. Verwendung von Calciumcarbonat als Verstärker süßer, fruchtiger Geschmacksnoten von Zusammensetzungen, umfassend Tomatenpulver.

16. Verwendung einer Kombination von Calciumcarbonat und Citronensäure als Verstärker von abgerundeten, süßen Geschmacksnoten von Zusammensetzungen, umfassend Tomatenpulver.

## Revendications

1. Composition particulaire savoureuse ayant une teneur en eau ne dépassant pas 15 % en poids et comprenant:
a) 5 à 99 % en poids, en poids de la composition, de poudre de tomate, dans laquelle au moins 70 % en poids de ladite poudre de tomate a une taille de maille inférieure à 850 µm,
b) 0,5 à 5 % en poids, en poids de la poudre de tomate, de poudre de carbonate de calcium, ladite poudre de carbonate de calcium ayant un diamètre de grain médian en volume (D₅₀) de 0,1 à 50 µm.

2. Composition particulaire savoureuse selon la revendication 1, dans laquelle au moins 70 % en poids de ladite poudre de tomate a une taille de maille supérieure à 50 µm, de préférence supérieure à 75 µm, de préférence encore supérieure à 100 µm.

3. Composition particulaire savoureuse selon la revendication 1 ou la revendication 2, dans laquelle la poudre de carbonate de calcium a un diamètre de grain médian en volume (D₅₀) dans la plage de 0,5 à 40 µm, de préférence dans la plage de 1 à 30 µm, de préférence encore dans la plage de 2 à 30 µm.

4. Composition particulaire savoureuse selon l'une quelconque des revendications précédentes, dans laquelle la poudre de carbonate de calcium a une surface spécifique dans la plage de 1 à 200 m²/g, de préférence dans la plage de 20 à 180 m²/g, de préférence encore dans la plage de 30 à 160 à 200 m²/g, mesurée à l'aide d'azote et de la méthode BET selon ISO 9277:2010.

5. Composition particulaire savoureuse selon l'une quelconque des revendications précédentes, dans laquelle la composition comprend c) 5 à 25 % en poids, en poids de la composition, d'acide comestible, de préférence 7 à 20 % en poids d'acide comestible, de préférence encore 10 à 15 % en poids, en poids de la composition, d'acide comestible.

6. Composition particulaire savoureuse selon la revendication 5, dans laquelle l'acide comestible est choisi dans le groupe consistant en l'acide ascorbique, l'acide acétique, l'acide citrique, l'acide fumarique, l'acide gluconique, la glucono delta lactone, l'acide lactique, l'acide malique, l'acide succinique, le jus de citron, et leurs combinaisons, de préférence dans laquelle l'acide comestible est l'acide citrique.

7. Composition particulaire savoureuse selon l'une quelconque des revendications précédentes, dans laquelle une solution aqueuse à 1 % en poids de la composition particulaire savoureuse a un pH dans la plage de 4,5 à 6,5 à 25°C.

8. Composition particulaire savoureuse selon l'une quelconque des revendications précédentes comprenant:
d) 3 à 30 % en poids, en poids de la composition, de sel comestible choisi parmi le chlorure de sodium, le chlorure de potassium et leurs combinaisons,
e) 0 à 50 % en poids, en poids de la composition, d'ingrédients donnant un goût savoureux choisis parmi le glutamate, les 5'-ribonucléosides, le saccharose, le glucose, le fructose, et leurs combinaisons,
f) 0 à 10 % en poids, en poids de la composition, de composant amidon choisi parmi l'amidon, la farine, la maltodextrine et leurs combinaisons,
g) 0 à 60 % en poids, en poids de la composition, de matière végétale choisie parmi les légumes, les légumineuses, les herbes, les épices et leurs combinaisons,
h) 0 à 60 % en poids, en poids de la composition, de graisse,
dans laquelle la combinaison de d) à h) représente au moins 30 % en poids de la composition.

9. Composition particulaire savoureuse selon l'une quelconque des revendications précédentes comprenant:
a) 15 à 40 % en poids, en poids de la composition, de la poudre de tomate,
b) 1,5 à 2,5 % en poids, en poids de la poudre de tomate, de la poudre de carbonate de calcium,
c) 1 à 15 % en poids, en poids de la composition, d'acide comestible, de préférence l'acide citrique,
d) 5 à 15 % en poids, en poids de la composition, de sel comestible choisi parmi le chlorure de sodium, le chlorure de potassium et leurs combinaisons,
e) 5 à 15 % en poids, en poids de la composition, d'ingrédients donnant un goût savoureux choisis parmi le glutamate, les 5'-ribonucléosides, le saccharose, le glucose, le fructose, et leurs combinaisons,
f) 2 à 7 % en poids, en poids de la composition, de composant amidon choisi parmi l'amidon, la farine, la maltodextrine et leurs combinaisons,
g) 20 à 40 % en poids, en poids de la composition, de matière végétale choisie parmi les légumes, les légumineuses, les herbes, les épices et leurs combinaisons,
h) 1 à 5 % en poids, en poids du produit alimentaire savoureux, de graisse.

10. Composition particulaire savoureuse selon la revendication 8 ou 9, dans laquelle la composition est un produit alimentaire particulaire savoureux choisi dans le groupe consistant en une soupe, une sauce, un condiment, un bouillon, un assaisonnement et un jus.

11. Procédé pour préparer une composition particulaire savoureuse, ledit procédé comprenant la combinaison de 100 parties en poids de poudre de tomate avec 0,5 à 6 parties en poids de poudre de carbonate de calcium, dans lequel au moins 70 % en poids de ladite poudre de tomate a une taille de maille inférieure à 850 µm, et ladite poudre de carbonate de calcium ayant un diamètre de grain médian en volume (D₅₀) de 0,1 à 50 µm.

12. Procédé pour préparer une composition particulaire savoureuse, ledit procédé comprenant les étapes de:
i) fourniture de 5 à 50 % en poids, en poids de la composition, d'une poudre savoureuse comprenant:
a) 80 à 99 % en poids de poudre de tomate, dans lequel au moins 70 % en poids de ladite poudre de tomate a une taille de maille inférieure à 850 µm et
b) 0,5 à 5 % en poids, en poids de poudre de tomate, de poudre de carbonate de calcium, ladite poudre de carbonate de calcium ayant un diamètre de grain médian en volume (D₅₀) de 0,1 à 50 µm,
ii) mélange de la poudre de l'étape i) avec 5 à 70 parties en poids d'ingrédients alimentaires particulaires pour fournir une composition particulaire savoureuse, de préférence les ingrédients alimentaires particulaires étant choisis parmi:
• 3 à 30 % en poids en poids de la composition, de sel comestible choisi parmi le chlorure de sodium, le chlorure de potassium et leurs combinaisons,
• 0 à 50 % en poids en poids de la composition, d'ingrédients donnant un goût savoureux choisis parmi le glutamate, les 5'-ribonucléosides, le saccharose, le glucose, le fructose et leurs combinaisons,
• 0 à 10 % en poids, en poids de la composition, de composant amidon choisi parmi l'amidon, la farine, la maltodextrine et leurs combinaisons,
• 0 à 60 % en poids, en poids de la composition, de matière végétale choisie parmi les légumes, les légumineuses, les herbes, les épices et leurs combinaisons,
• 0 à 60 % en poids, en poids de la composition, de graisse.

13. Procédé selon la revendication 12, dans lequel l'étape ii) comprend le mélange des ingrédients suivants:
• 5 à 15 % en poids, en poids de la composition, de sel comestible choisi parmi le chlorure de sodium, le chlorure de potassium et leurs combinaisons,
• 5 à 15 % en poids en poids de la composition, d'ingrédients donnant un goût savoureux choisis parmi le glutamate, les 5'-ribonucléosides, le saccharose, le glucose, le fructose et leurs combinaisons,
• 2 à 7 % en poids, en poids de la composition, de composant amidon choisi parmi l'amidon, la farine, la maltodextrine et leurs combinaisons,
• 20 à 40 % en poids, en poids de la composition, de matière végétale choisie parmi les légumes, les légumineuses, les herbes, les épices et leurs combinaisons,
• 1 à 5 % en poids, en poids du produit alimentaire savoureux, de graisse.

14. Procédé pour préparer une sauce, une soupe, un condiment ou un jus, ledit procédé comprenant le mélange de 10 parties de la composition particulaire savoureuse particulaire selon les revendications 1 à 10, avec 5 à 200 parties d'un liquide aqueux.

15. Utilisation de carbonate de calcium comme exhausteur de notes gustatives fruitées sucrées de compositions comprenant de la poudre de tomate.

16. Utilisation d'une combinaison de carbonate de calcium et d'acide citrique comme exhausteur de notes gustatives de saveur sucrées rondes de compositions comprenant de la poudre de tomate.
